# EUROPÄISCHE PATENTSCHRIFT

(11) **EP 3 688 860 B1**
(45) Veröffentlichungstag und Bekanntmachung des Hinweises auf die Patenterteilung: **16.03.2022**
(21) Anmeldenummer: 18782691.2
(22) Anmeldetag: 01.10.2018
(51) Int. Cl.: H02J 11/00, H02J 3/38

(54) **VERFAHREN ZUM VERSORGEN VON WINDENERGIEANLAGENKOMPONENTEN MIT ENERGIE SOWIE ENERGIEVERSORGUNGSEINRICHTUNG UND WINDENERGIEANLAGE DAMIT**
METHOD FOR SUPPLYING WIND ENERGY PLANT COMPONENTS WITH ENERGY AND ENERGY SUPPLY DEVICE AND WIND ENERGY PLANT USING THE SAME
PROCÉDÉ POUR ALIMENTER EN ÉNERGIE DES COMPOSANTS D'ÉOLIENNE, DISPOSITIF D'ALIMENTATION EN ÉNERGIE ET ÉOLIENNE COMPRENANT CE DISPOSITIF

(30) Priorität: 29.09.2017 DE 102017122695
(43) Veröffentlichungstag der Anmeldung: 05.08.2020
(73) Patentinhaber: Wobben Properties GmbH, 26607 Aurich (DE)
(72) Erfinder: BUSKER, Kai, 26629 Großefehn (DE); HELLER, Stefan, 26605 Aurich (DE); GERTJEGERDES, Stefan, 26603 Aurich (DE); MACKENSEN, Ingo, 26607 Aurich (DE); WILHELM, Juri, 26605 Aurich (DE)
(74) Vertreter: Eisenführ Speiser
(86) Internationale Anmeldenummer: PCT/EP2018/076556
(87) Internationale Veröffentlichungsnummer: WO 2019/063835

(56) Entgegenhaltungen:
- EP-A1- 2 806 159
- EP-A2- 1 137 149
- WO-A1-2005/113964
- WO-A1-2016/120260
- US-A1- 2008 001 408
- US-A1- 2011 140 534

## Beschreibung

Die Erfindung betrifft die Energieversorgung von Windenergieanlagen, insbesondere von Komponenten von Windenergieanlagen, mit einer Energieversorgungseinrichtung der Windenergieanlage sowie ein Verfahren dafür.

Windenergieanlagen sind hinlänglich bekannt. Bei Windenergieanlagen treibt ein aerodynamischer Rotor einen Generatorläufer eines Generators an, sodass der Generator aus dem Wind gewonnene Bewegungsenergie in elektrische Energie umwandelt. Diese elektrische Energie wird vom Generator über einen Transformator an ein mit der Windenergieanlage verbundenes Versorgungsnetz eingespeist. Hierzu ist die Windenergieanlage über einen Netzanschlusspunkt mit dem Versorgungsnetz verbunden.

Elektrische Versorgungsnetze sind bekannt und mit ihnen wird elektrische Energie zwischen Energiespeisern und Energieverbrauchern verteilt. Ein solches elektrisches Versorgungsnetz wird heutzutage mit einer Wechselspannung mit einer vorbestimmten Netzfrequenz betrieben, meist 50 Hz oder 60 Hz. Sowohl die Einspeiser als auch die Verbraucher haben sich auf diese Frequenz eingestellt.

Daher eignen sich derartige Versorgungsnetze auch zur Versorgung der Windenergieanlage selbst. Es ist daher üblich, die Windenergieanlage selbst, insbesondere deren Komponenten, nämlich die elektrischen Komponenten, mit elektrischer Energie aus dem Versorgungsnetz zu versorgen. Komponenten, die eine Energieversorgung benötigen, sind beispielsweise Steuerungskomponenten der Windenergieanlage, Kühlungseinrichtungen, mechanische Aktoren sowie die Steuerung selbst. Als Beispiel für Komponenten seien zum Beispiel der Antrieb für eine Azimutverstellung der Windenergieanlage, die Verstellmotoren zur Rotorblattverstellung oder diverse Kühleinrichtungen zum Kühlen des Generators und/oder der Umrichter genannt. Weitere Komponenten sind die elektrischen Steuerungsund Regelungseinrichtungen, die mechanische Komponenten der Windenergieanlage zum Betrieb ansteuern.

Das Versorgungsnetz, mit dem bekanntermaßen die Windenergieanlage selbst mit Energie versorgt wird, unterliegt hierbei Spannungsschwankungen im Bereich von 10 %. Diese Netzspannungsschwankungen sind regulatorisch begrenzt, sodass durch entsprechende Regelmechanismen die genannten Netzspannungsschwankungen unter 10 % gehalten werden. Aufgrund des immer komplexer werdenden Energieversorgungsnetzes wird jedoch darüber diskutiert, diese Grenzen von Netzspannungsschwankungen zu erhöhen, da die Regelmechanismen die 10 %-Grenze nur mit sehr großem Aufwand einhalten können.

Aufgrund der zurzeit üblichen Netzspannungsschwankungen, die voraussichtlich nach Lockerung der Regularien noch zunehmen, werden zunehmend steigende Anforderungen an die Windenergieanlage bzw. die Komponenten der Windenergieanlage gestellt, um einen sicheren Betrieb der Windenergieanlage bei diesen Netzspannungsschwankungen zu gewährleisten. Hierzu werden für die einzelnen Komponenten einer Windenergieanlage jeweils Glättungs- und Kompensationsschaltungen vorgesehen, um empfindlichen Bauteilen der Komponenten zu jeder Zeit einerseits eine ausreichende Spannung für den Betrieb zur Verfügung zu stellen und andererseits einer Beschädigung der Komponente durch eine zu hohe Spannung entgegenzuwirken.

Diese zusätzlichen Glättungs- und Kompensationsschaltungen bedeuten einen zusätzlichen Kostenfaktor bei der Herstellung der Windenergieanlage, insbesondere, da es somit nicht mehr möglich ist, Standardkomponenten, die derartige Kompensationsschaltungen nicht standardmäßig umfassen, einzusetzen.

Es ist daher Aufgabe der vorliegenden Erfindung, eines der vorgenannten Probleme des Standes der Technik zu lösen. Insbesondere soll eine Möglichkeit gefunden werden, eine Energieversorgung der Windenergieanlage bereitzustellen, die eine Energie mit vergleichsweise geringeren Spannungsschwankungen als die Netzspannung eines Versorgungsnetzes zur Verfügung stellt. Jedenfalls ist es Aufgabe der vorliegenden Erfindung, eine Alternative zum aus dem Stand der Technik Bekannten aufzuzeigen.

Das Deutsche Patent- und Markenamt hat in der Prioritätsanmeldung zu vorliegender Anmeldung den folgenden Stand der Technik recherchiert: US 2011/0140534 A1 und US 2012/0056425 A1. Des Weiteren sind Verfahren und Vorrichtungen zum Versorgen mindestens einer Komponente einer Windenergieanlage aus US 2008/001408 A1, EP 2 806 159 A1, WO 2016/120260 A1 und EP 1 137 149 A2 bekannt.

Hierzu betrifft die Erfindung ein Verfahren zum Versorgen mindestens einer Komponente, nämlich einer elektrischen Komponente, einer Windenergieanlage mit Energie durch eine Energieversorgungseinrichtung. Gemäß dem Verfahren wird die Energie im Betrieb der Windenergieanlage der mit dem Generator der Windenergieanlage erzeugten Energie durch die Energieversorgungseinrichtung entnommen und der Komponente der Windenergieanlage zur Versorgung bereitgestellt. Der hier beschriebene Fall bezeichnet also den Betrieb der Windenergieanlage, der beispielsweise zu unterscheiden ist von einer Startphase der Windenergieanlage, bei der die Windenergieanlage hochgefahren wird. Der Betrieb bezeichnet somit den Zustand der Windenergieanlage, bei dem kinetische Energie aus dem Wind in elektrische Energie mit dem Generator der Windenergieanlage umgewandelt und in ein mit der Windenergieanlage verbundenes elektrisches Versorgungsnetz eingespeist wird.

Erfindungsgemäß wird demnach nicht die gesamte elektrische Energie in das Versorgungsnetz eingespeist. Vielmehr wird ein Teil der elektrischen Energie, die mit dem Generator erzeugt wird, nicht in das Versorgungsnetz eingespeist, sondern Komponenten der Windenergieanlage mit dieser Energie versorgt. Eine Entnahme von Energie aus dem Versorgungsnetz, die hohen Schwankungen, zum Beispiel im Hinblick auf die Spannung, unterliegt, zur Versorgung der Komponenten ist somit nicht mehr nötig. Komponenten sind hier beispielsweise die Steuerung der Windenergieanlage, Steuerungen der Umrichter, eine Steuerung der Gondel, Kühlmittelpumpen, Pitchantriebe, Azimutantriebe, elektrische Ausrüstungen des Turms und der Gondel, wie beispielsweise Beleuchtung und Belüftung.

Dank der Erfindung wird im Betrieb der Windenergieanlage demnach die elektrische Energie der Windenergieanlage zur Versorgung der Komponenten der Windenergieanlage direkt der elektrischen Energie entnommen, die mit dem Generator der Windenergieanlage erzeugt wird. Diese Energie unterliegt geringeren Schwankungen, insbesondere im Hinblick auf ihre Spannung, als die Netzspannung, sodass auf Kompensationskomponenten der einzelnen Komponenten der Windenergieanlage verzichtet werden kann.

Außerdem betrifft die Erfindung eine Energieversorgungseinrichtung, mit der das erfindungsgemäße Verfahren ausführbar ist. Die Energieversorgungseinrichtung weist einerseits einen Eingang auf, der elektrisch mit dem Generator einer Windenergieanlage verbunden und andererseits einen Ausgang auf, der mit einer Komponente der Windenergieanlage verbunden ist. Die Energieversorgungseinrichtung versorgt die Komponente mit vom Generator erzeugter Energie.

Gemäß der Erfindung wird die mit dem Generator erzeugte Energie mit einem Gleichrichter gleichgerichtet und in einem Gleichspannungszwischenkreis zwischengespeichert. Die Energie zum Versorgen der Komponente der Windenergieanlage wird dem Gleichspannungszwischenkreis durch die Energieversorgungseinrichtung entnommen. Die Energieversorgungseinrichtung weist somit einen Eingang auf, der mit dem Gleichspannungszwischenkreis verbindbar oder verbunden ist. Durch Einspeisen der mit dem Generator erzeugten Energie in einen Gleichspannungszwischenkreis wird für die Komponente der Windenergieanlage zunächst eine stabile Gleichspannung, die im Wesentlichen keinen oder nur geringen Schwankungen unterliegt, bereitgestellt. Eine stabile, im Wesentlichen schwankungsfreie Gleichspannung lässt sich einfach in eine definierte Spannung für die Versorgung der Komponenten der Windenergieanlage wandeln, sodass im Wesentlichen keine Spannungsschwankungen mehr auftreten können. Auf zusätzliche Bauteile zur Schwankungskompensation kann somit verzichtet werden.

Gemäß einerweiteren Ausführungsform der Energieversorgungseinrichtung ist diese demnach mit dem Gleichspannungszwischenkreis verbunden, um dem Gleichspannungszwischenkreis die Energie zur Versorgung der Komponente einer Windenergieanlage zu entnehmen.

Gemäß einer weiteren Ausführungsform wird die Spannung der Energie, die dem Gleichspannungszwischenkreis entnommen wird, um die Komponenten mit Energie zu versorgen, einem Wechselrichter der Energieversorgungseinrichtung zugeführt und in dem Wechselrichter in eine Wechselspannung gewandelt. Dieser Wechselrichter der Energieversorgungseinrichtung ist unterschiedlich zu einem Wechselrichter, der die Spannung des Zwischenkreises in eine Wechselspannung zur Bereitstellung fürdas Versorgungsnetz umwandelt. Entsprechend umfasst die Energieversorgungseinrichtung einen Wechselrichter, um die Spannung der aus dem Gleichspannungszwischenkreis entnommenen Energie in eine Wechselspannung zu wandeln, die zur Versorgung der Komponenten dient.

Es ist somit neben dem Wechselrichter, der eine vom Generator zuvor bereitgestellte Energie in eine Wechselspannung mit einer für das Versorgungsnetz angepassten Frequenz wandelt, ein eigener Wechselrichter in der Energieversorgungseinrichtung vorgesehen, um eine Wechselspannung mit einer für die Komponenten angepassten Frequenz zur Verfügung zu stellen. Hierdurch ist es möglich, den Wechselrichter der Energieversorgungseinrichtung so zu konfektionieren, dass eine für die Komponenten geeignete Frequenz, die beispielsweise besonders schwankungsfrei ist, bereitzustellen.

Hierbei kann auch berücksichtigt werden, dass Komponenten eine andere Anforderung an die Frequenz einer Wechselspannung haben können als das Netz. Wird zum Beispiel zur Netzstützung die vom Generator bereitgestellte Energie, die in ein Versorgungsnetz eingespeist werden soll, im Hinblick auf ihre Wechselspannungsfrequenz in besonderer Weise angepasst, so kann unabhängig hiervon weiterhin eine an die Komponenten angepasste Wechselspannungsfrequenz durch den Wechselrichter der Energieversorgungseinrichtung bereitgestellt werden. Die Energieversorgung der Komponenten erfolgt somit unabhängig von einer möglicherweise an die Netzanforderung angepassten Frequenz.

Gemäß einer weiteren Ausführungsform wird die vom Wechselrichter der Energieversorgungseinrichtung gewandelte Wechselspannung mit einem Filter gefiltert. Dieses Filter weist vorzugsweise eine Induktivität oder Drossel und/oder mindestens einen Kondensator auf. Entsprechend umfasst die Energieversorgungseinrichtung gemäß einer Ausführungsform ein Filter, nämlich vorzugsweise eine Induktivität oder Drossel und/oder mindestens einen Kondensator, um die mit dem Wechselrichter gewandelte Wechselspannung der Energieversorgungseinrichtung zu filtern.

Diese Filterung dient insbesondere zur Glättung der Wechselspannung, die beispielsweise am Ausgang des Wechselrichters "zerhackt" ist. Eine geglättete Wechselspannung mit einem im Wesentlichen stetigen sinusförmigen Verlauf wird somit erhalten. Hierdurch werden die Anforderungen für die Komponenten einer Windenergieanlage bezüglich ihrer Robustheit gegenüber unstetigen Wechselspannungen vermindert.

Erfindungsgemäß ist ein Transformator in der Energieversorgungseinrichtung vorgesehen, um die Spannung der aus dem Gleichspannungszwischenkreis entnommenen und in eine Wechselspannung gewandelten Energie in eine Spannung, die angepasst für die Komponenten ist, zu wandeln. Hierbei wird vorzugsweise die Wechselspannung in eine Spannung von 400 V gewandelt. Angepasste Spannungsamplituden für die Komponenten sind somit bereitstellbar.

Gemäß einerweiteren Ausführungsform umfasst die Energieversorgungseinrichtung einen Energiespeicher, der über den Eingang der Energieversorgungseinrichtung mit dem Gleichspannungszwischenkreis verbindbar ist. Der Energiespeicher ist insbesondere ein Akkumulator oder eine sogenannte "Powercap". Somit lassen sich die Komponenten der Windenergieanlage mit Energie aus dem Energiespeicher versorgen, wenn der Generator keine Energie erzeugt, während der Energiespeicher aus dem Gleichspannungszwischenkreis ladbar ist.

Gemäß einer weiteren Ausführungsform des Verfahrens wird im Falle, dass keine Energie im Gleichspannungszwischenkreis oder im gegebenenfalls vorhandenen Energiespeicher zur Verfügung steht, die mindestens eine Komponente mit Energie aus einem mit der Windenergieanlage verbundenen Versorgungsnetz entnommen. Vorzugsweise ist hierzu der Transformator der Energieversorgungseinrichtung, beispielsweise auf seiner Sekundärseite, mit der auch die Komponenten mit Energie versorgt werden, gleichzeitig mit einem Netzeinspeisetransformator der Windenergieanlage über einen weiteren Eingang der Energieversorgungseinrichtung verbunden. Ist beispielsweise die Energie aus einem Energiespeicher der Energieversorgungseinrichtung aufgebraucht, wenn sich die Windenergieanlage in einem Notbetrieb befindet, so kann ein erneuter Start der Windenergieanlage durch eine Entnahme von Energie aus dem Versorgungsnetz erfolgen.

Gemäß einer weiteren Ausführungsform weist die Energieversorgungseinrichtung einen Gleichrichter auf, um der Energieversorgungseinrichtung zugeführte Energie aus dem Versorgungsnetz einer Erregerschaltung des Generators an einem weiteren Ausgang und/oder dem Energiespeicher, insbesondere zum Laden, bereitzustellen.

Gemäß einer weiteren Ausführungsform ist ein Umschalter auf eine externe Versorgung der elektrischen Grundausrüstung der Komponenten, z.B. der Beleuchtung, der Steckdosen, usw., vorgesehen. Hierzu umfasst die Energieversorgungseinrichtung einen weiteren Eingang zum Anschließen einer externen Versorgung, die beispielsweise ein externes Stromaggregat ist. Somit kann die Grundausrüstung betrieben werden, während alle anderen Anlagenkomponenten vom Netz getrennt sein können. Beispiele hierfür sind, dass kein Versorgungsnetz vorhanden ist, z.B. während des Aufbaus der Windenergieanlage, der Ausfall des Versorgungsnetzes oder Reparatur- bzw. Wartungsarbeiten am Transformator bzw. der Energieversorgungseinrichtung.

Weitere Ausführungsformen ergeben sich anhand der in den Figuren näher erläuterten Ausführungsbeispiele.
- Fig. 1: zeigt eine Windenergieanlage,
- Fig. 2: ein Energieversorgungsschema einer Windenergieanlage
- Fig. 3: den Ablauf eines Verfahrens zum Versorgen mindestens einer Komponente einer Windenergieanlage mit Energie im Betrieb der Windenergieanlage,
- Fig. 4: die Schritte zum Starten einer Windenergieanlage ohne einen Energiespeicher einer Energieversorgungseinrichtung und
- Fig. 5: die Schritte zum Starten einer Windenergieanlage mit einem Energiespeicher.

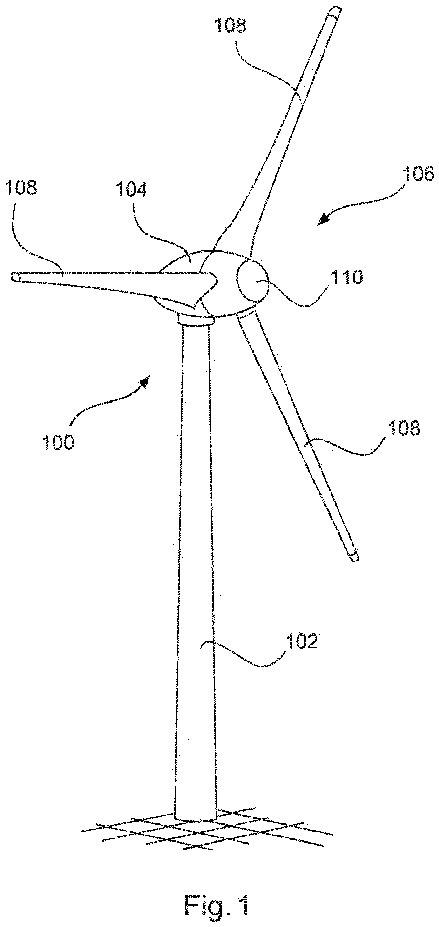

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

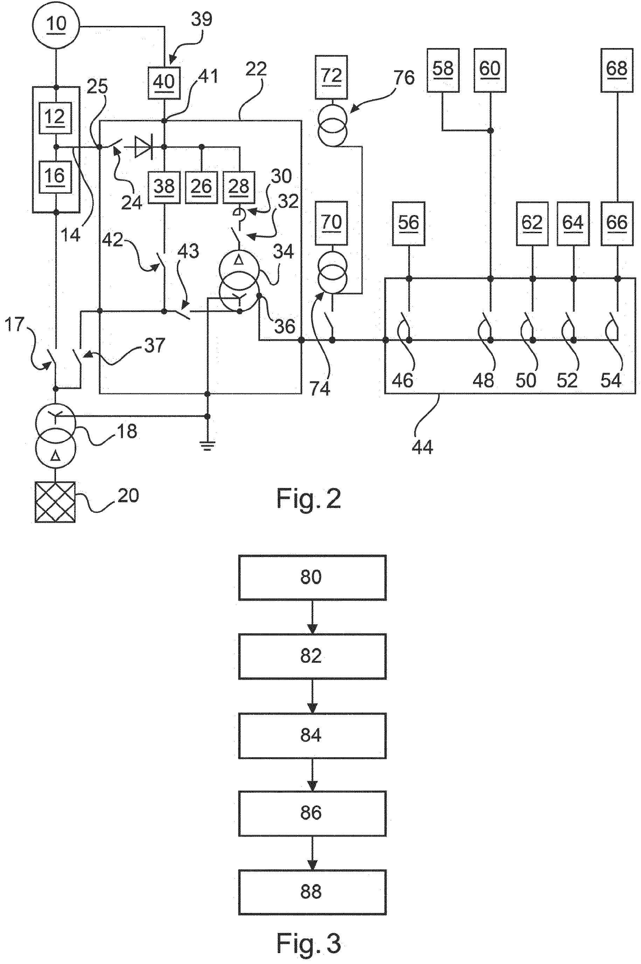

Fig. 2 zeigt ein Energieversorgungsschema in einer Windenergieanlage 100. Die Windenergieanlage 100 weist einen Generator 10 auf, der elektrische Energie erzeugt. Die elektrische Energie wird über einen Gleichrichter 12 gleichgerichtet und in einen Gleichspannungszwischenkreis 14 eingeleitet. Hier ist zur besseren Darstellung nur ein Gleichrichter 12 dargestellt, wobei dieser gemäß weiteren Ausführungsbeispielen aus mehreren Modulen, also mehreren Gleichrichtern 12 besteht oder diese umfasst. Aus dem Gleichspannungszwischenkreis 14 wird die Energie mit einer gleichgerichteten Spannung einem Wechselrichter 16 zugeführt, der die gleichgerichtete Spannung in eine Wechselspannung mit einer an die Netzanforderungen angepassten Frequenz wandelt. Die Energie mit der Wechselspannung wird dann über einen geschlossenen Schalter 17 und über einen Netztransformator 18 auf eine geeignete Spannung für ein mit der Windenergieanlage 100 verbundenes Versorgungsnetz 20 transformiert und in das Versorgungsnetz 20 eingespeist.

Außerdem ist eine Energieversorgungseinrichtung 22 dargestellt, die über einen Schalter 24 an ihrem Eingang 25 mit dem Gleichspannungszwischenkreis 14 verbindbar ist.

Vom Generator 10 erzeugte Energie wird somit der Energieversorgungseinrichtung 22 nach Gleichrichtung durch den Gleichrichter 12 über den Eingang 25 zugeführt. Mit dem Gleichspannungszwischenkreis 14 ist bei geschlossenem Schalter 24 ein Energiespeicher 26 verbunden, in dem Energie gespeichert wird. Neben diesem Energiespeicher 26 weist auch der Gleichspannungszwischenkreis 14 mehrere nicht dargestellte Kapazitäten auf, um Energie zu speichern, sodass der Energiespeicher 26 ein optionales Bauelement darstellt.

Gemäß dem hier dargestellten vorteilhaften Ausführungsbeispiel mit Energiespeicher 26 zusätzlich zu den ohnehin im Gleichspannungszwischenkreis 14 enthaltenen Kapazitäten ist eine wesentlich größere Energiespeicherung möglich als ohne Energiespeicher. In Notfällen oder im Startbetrieb, wenn vom Generator 10 selbst keine Energie erzeugt wird, dient der Energiespeicher 26 so, um Energie für die Energieversorgungseinrichtung 22 unabhängig vom Gleichspannungszwischenkreis 14 bereitzustellen.

In der Energieversorgungseinrichtung 22 ist außerdem ein Wechselrichter 28 vorgesehen, der die Gleichspannung der mit dem Generator 10 erzeugten Energie aus dem Gleichspannungszwischenkreis 14 in eine Wechselspannung wandelt. Im Gegensatz zum Wechselrichter 16, der eine Frequenz der Spannung erzeugt, die für die Einspeisung in ein Netz angepasst ist, ist der Wechselrichter 28 eingerichtet, eine Spannung mit einer Frequenz zu erzeugen, die geeignet ist, um Komponenten der Windenergieanlage 100 zu versorgen. Am Ausgang des Wechselrichters 28 ist ein Filter 30, nämlich eine Drossel und/oder ein oder mehrere Kondensatoren, angeordnet, das die mit dem Wechselrichter 28 erzeugte Wechselspannung glättet.

Außerdem ist ein Schalter 32 vorgesehen, über den im geschlossenen Zustand die geglättete Wechselspannung der Primärseite eines Transformators 34 zugeführt wird. Der Transformator 34 transformiert die Spannung in eine für die Versorgung der Komponenten der Windenergieanlage 100 geeignete Spannung. Diese wird am Ausgang 36 der Sekundärseite des Transformators 34 ausgegeben. Vorzugsweise werden dem Transformator 34 beispielsweise auf seiner Primärseite 550 V oder 500 V Wechselspannung zugeführt und am Ausgang 36 400 V zur Versorgung der Komponenten ausgegeben. Im Betrieb der Windenergieanlage 100 sind demnach die Schalter 24 und 32 geschlossen.

Die Sekundärseite des Transformators 34 der Energieversorgungseinrichtung 22 ist über Schalter 37 und 43 mit dem netzseitigen Transformator 18 verbindbar. Im Falle, dass kein Energiespeicher 26 vorgesehen oder der Energiespeicher 26 entladen ist und die Windenergieanlage 100 abgeschaltet ist, also keine Energie erzeugt, können diese Schalter 37 und 43 geschlossen werden. Somit kann Spannung aus dem Versorgungsnetz 20 entnommen werden und über die Sekundärseite des Transformators 34 in eine Versorgungsspannung zur Versorgung der Komponenten gewandelt werden. Diese wird dann am Ausgang 36 ausgegeben.

Über den geschlossenen Schalter 37 und einen weiteren geschlossenen Schalter 42 kann Falle, dass kein Energiespeicher 26 vorgesehen oder der Energiespeicher 26 entladen und die Windenergieanlage 100 abgeschaltet ist, einem Gleichrichter 38 der Energieversorgungseinrichtung 22 ebenfalls Energie aus dem Versorgungsnetz 20 zugeführt werden. Diese wird dann an einem weiteren Ausgang 41 für eine Erregerschaltung 39 bereitgestellt, sodass die Erregung des Generators 10 über einen Tiefsetzsteller 40 der Erregerschaltung 39 einen Start der Windenergieanlage 100 ermöglicht.

Die vom Versorgungsnetz 20 bereitgestellt Energie ist somit einem Gleichrichter 38 zuführbar, der die Energie aus dem Netz gleichrichtet und über einen Tiefsetzsteller 40 eine Fremderregung des Generators 10 erzeugt. Hierzu ist das Versorgungsnetz 20 über den Schalter 42 mit dem Gleichrichter 38 verbunden. Im normalen Betrieb der Windenergieanlage 100, wenn also vom Generator 10 genügend Energie in den Gleichspannungszwischenkreis 14 eingespeist und dort bereitgestellt wird, wird der Tiefsetzsteller 40 direkt aus dem Gleichspannungszwischenkreis 14 gespeist, wobei dann der Schalter 42 geöffnet ist. Hier wird in Kauf genommen, bei einem Start kurzzeitig auf die schwankende Netzspannung zurückzugreifen, da anderenfalls kein Start möglich wäre.

Ist der dargestellte Energiespeicher 26 vorhanden und geladen und die Windenergieanlage 100 abgeschaltet, so werden zum Starten die Schalter 42 und 43 geöffnet und die Schalter 24 und 32 geschlossen. Somit kann aus dem Energiespeicher 26 der Tiefsetzsteller 40 versorgt und somit die Erregung im Generator 10 erzeugt werden, sodass der fremderregte Generator 10 beginnt, Energie zu erzeugen, die dann in den Gleichspannungszwischenkreis 14 eingespeist wird. Sobald genügend Energie im Gleichspannungszwischenkreis 14 zur Verfügung steht, wird der Energiespeicher 26 wieder geladen.

Außerdem ist der Ausgang 36 des Transformators 34 mit einer Hauptverteilung 44 zur Verteilung der Energie an Komponenten der Windenergieanlage 100 verbunden. Über die Schalter 46 bis 54 ist dann die am Ausgang 36 des Transformators 34 ausgegebene Energie Komponenten der Windenergieanlage 100 zuführbar. Eine erste Komponente ist beispielsweise eine Kühlmittelpumpe 56 zum Pumpen der Kühlflüssigkeit zum Kühlen der Umrichter. Weitere Komponenten sind der Pitchantrieb 58 und der Azimutantrieb 60. Außerdem ist eine weitere Komponente eine Rückkühleinheit 62 zum Kühlen der Kühlflüssigkeit, die mit der Kühlmittelpumpe 56 gefördert wird. Zudem ist eine Komponente das sogenannte E-Modul 64, das beispielsweise eine Steuerung zum Steuern des Wechselrichters 16 umfasst, um einen netzkonformen Wechselstrom zu erzeugen. Ferner umfassen die Komponenten die elektrische Ausrüstung des Turms 66 sowie die elektrische Ausrüstung der Gondel 104. Die elektrische Ausrichtung des Turms 66 sowie die elektrische Ausrichtung der Gondel 104 umfasst beispielsweise Beleuchtungs- und Belüftungsanlagen im Turm 102 bzw. der Gondel 104.

Weitere Komponenten, die mit dem Ausgang 36 des Transformators 34 verbunden sind, sind beispielsweise eine Steuerung des E-Moduls 70 sowie eine Steuerung der Gondel 72. Da diese Komponenten 70 und 72 einer besonderen Spannung bedürfen, sind jeweils weitere Transformatoren 74 und 76 vor die Komponenten 70 und 72 vorgeschaltet.

Fig. 3 zeigt die Energieversorgung der Windenergieanlage 100 im normalen Betrieb, also wenn der Generator 10 Energie erzeugt und über den Gleichrichter 12 in den Gleichspannungszwischenkreis 14 einspeist. Hierbei wird im Schritt 80 Energie aus dem Gleichspannungszwischenkreis 14 entnommen und in einem Schritt 82 die Gleichspannung der Energie in eine Wechselspannung gewandelt. In einem Schritt 84 wird die Wechselspannung mit einem Filter 30, insbesondere einer Drossel und/oder mindestens ein Kondensator, geglättet und in einem Schritt 86 die geglättete Wechselspannung mit einem Transformator 34 in eine komponentenkonforme Spannung transformiert. Im Schritt 88 wird die Spannung den Komponenten 56-72 zur Versorgung zugeführt.

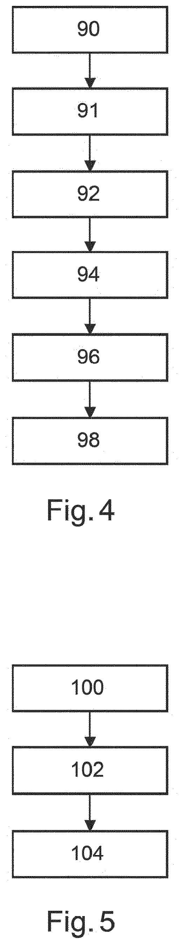

Fig. 4 zeigt die Schritte zum Starten der Windenergieanlage 100 ohne einen Energiespeicher 26. Hierbei wird über den Transformator 18 in einem Schritt 90, in dem vorzugsweise Schalter 37 und 42 und 43 geschlossen und ein Schalter 32 geöffnet werden, Energie aus dem Versorgungsnetz 20 entnommen und dem Transformator 34 in einem Schritt 91 zugeführt. Der Transformator 34 wandelt die entnommene Spannung aus dem Netz 20 in einem Schritt 92 in eine Spannung zur Versorgung der Komponenten 56-72 der Windenergieanlage 100. Außerdem wird im Schritt 92 einem Gleichrichter 38 und einem Tiefsetzsteller 40 zur Erzeugung der Fremderregung des Generators 10 Energie aus dem Versorgungsnetz 20 bereitgestellt. Durch Rotation des Generators 10 erzeugt dieser im Schritt 94 Energie und speist diese über den Gleichrichter 12 in einen Gleichspannungszwischenkreis 14 ein. Nachdem die Spannung im Gleichspannungszwischenkreis 14 ein bestimmtes Niveau erreicht hat, werden im Schritt 96 vorzugsweise die Schalter 37 und 42 und 43 geöffnet und die Schalter 17 und 32 geschlossen. Nun wird aus dem Gleichspannungszwischenkreis 14 Energie in das Versorgungsnetz 20 eingespeist und die Komponenten 56-72 sowie der Tiefsetzsteller 40 zur Erzeugung der Erregung für den Generator 10 aus dem Gleichspannungszwischenkreis 14 gespeist. Dies erfolgt im Schritt 98.

Gemäß einer Alternative werden im Schritt 90 die Schalter 17, 32 und 42 geschlossen und der Schalter 43 geöffnet. Energie wird dem Versorgungsnetz 20 entnommen und dem Transformator 34 sowie der Erregerschaltung 39 über den Gleichrichter 38 in einem Schritt 91 zugeführt. Der Transformator 34 wandelt die entnommene Spannung aus dem Netz 20 in einem Schritt 92 in eine Spannung zur Versorgung der Komponenten 56-72 der Windenergieanlage 100.

Durch diese Verfahren ist es möglich auch im Wartungs- bzw. Reparaturfall eine Versorgung der Anlagenkomponenten bereitzustellen, ohne dass der Gleichspannungszwischenkreis geladen werden muss. So besteht die Möglichkeit nur wenige bestimmte Anlagenkomponenten mit Spannung zu versorgen, während andere Komponenten sicher von einer Spannung getrennt sind.

Fig. 5 zeigt ein weiteres Verfahren zum Starten einer Windenergieanlage 100 im Falle, dass ein Energiespeicher 26 vorhanden ist. In diesem Fall wird durch den Energiespeicher 26 über einen Wechselrichter 28, ein Filter 30 und einen Transformator 34 am Ausgang 36 des Transformators 34 eine Spannung bereitgestellt, die Komponenten 56-72 zur Verfügung bereitgestellt wird. Außerdem wird der Erregerschaltung 39 die Energie aus dem Energiespeicher 26 bereitgestellt. Dies erfolgt im Schritt 100. Im Schritt 102 erzeugt der Generator 10 dann Energie und speist diese in den Zwischenkreis 14 ein. Im Schritt 104 dient dann der Gleichspannungszwischenkreis 14 zur Versorgung der Erregerschaltung 39 sowie der Komponenten 56-72 in der in Fig. 3 beschriebenen Weise. Der Energiespeicher 26 wird in diesem Schritt außerdem geladen.

## Patentansprüche

1. Verfahren zum Versorgen mindestens einer Komponente (56-72) einer Windenergieanlage (100) mit Energie durch eine Energieversorgungseinrichtung (22), wobei die Energie von der Energieversorgungseinrichtung (22) im Betrieb der Windenergieanlage (100) der mit dem Generator (10) der Windenergieanlage (100) erzeugten Energie entnommen und der Komponente (56-72) der Windenergieanlage (100) zur Versorgung bereitgestellt wird, wobei
die Spannung der mit dem Generator (10) erzeugten Energie mit einem Gleichrichter (12) gleichgerichtet und in einem Gleichspannungszwischenkreis (14) zwischengespeichert wird, wobei die Energie zum Versorgen der Komponente (56-72) dem Gleichspannungszwischenkreis (14) durch die Energieversorgungseinrichtung (22) entnommen wird, wobei mit einem Transformator (34) der Energieversorgungseinrichtung (22) die Spannung der aus dem Gleichspannungszwischenkreis (14) entnommenen Energie in eine für die Komponente (56-72) angepasste Spannung, insbesondere 400 V, gewandelt wird, wobei der Transformator (34), insbesondere auf seiner Primärseite, die Energie aus dem Gleichspannungszwischenkreis (14) bezieht und, insbesondere an der Sekundärseite, am Ausgang (36) die Energie für die Komponenten (56-72) bereitstellt, **dadurch gekennzeichnet, dass** der Transformator (34), sekundärseitig, zusätzlich mit einem Versorgungsnetz (20) verbindbar ist um Energie aus dem Versorgungsnetz (20) zur Versorgung der Komponenten (56-72) oder der Erregerschaltung (39) bereitzustellen.

2. Verfahren nach Anspruch 1, wobei die Spannung der dem Gleichspannungszwischenkreis (14) entnommenen Energie zur Versorgung der Komponente (56-72) mit einem Wechselrichter (28) der Energieversorgungseinrichtung (22) in eine Wechselspannung gewandelt wird, wobei der Wechselrichter (28) der Energieversorgungseinrichtung (22) unterschiedlich zu einem Wechselrichter (16) ist, der die Spannung der im Gleichspannungszwischenkreis (14) bereitgestellten Energie für ein Versorgungsnetz (20) in eine Wechselspannung wandelt.

3. Verfahren nach Anspruch 2, wobei die mit dem Wechselrichter (28) der Energieversorgungseinrichtung (22) gewandelte Wechselspannung mit einem Filter (30) der Energieversorgungseinrichtung (22), insbesondere einer Induktivität oder Drossel und/oder mindestens ein Kondensator, gefiltert, insbesondere geglättet, wird.

4. Verfahren nach einem der vorhergehenden Ansprüche, wobei die Energieversorgungseinrichtung (22) einen Energiespeicher (26) aufweist, der insbesondere ein Akkumulator ist, und die mindestens eine Komponente (56-72) der Windenergieanlage (100) und/oder eine Erregerschaltung (39) der Windenergieanlage (100) mit Energie aus dem Energiespeicher (26) versorgbar ist, insbesondere wenn der Generator (10) keine Energie erzeugt.

5. Verfahren nach einem der vorhergehenden Ansprüche, wobei im Falle, dass keine Energie im Gleichspannungszwischenkreis (14) und/oder einem Energiespeicher (26) zur Verfügung steht, die mindestens eine Komponente (56-72) und/oder die Erregerschaltung (39) mit Energie aus einem mit der Windenergieanlage (100) verbundenen Versorgungsnetz (20) entnommen wird.

6. Energieversorgungseinrichtung, die eingerichtet ist, ein Verfahren nach einem der Ansprüche 1 bis 5 auszuführen, wobei
die Energieversorgungseinrichtung (22) einen Eingang (25) aufweist, der mit einem Gleichspannungszwischenkreis (14) verbindbar ist und an einem Ausgang (36) Energie zur Versorgung der Komponenten (56-72) und/oder an einem weiteren Ausgang (41) Energie zur Versorgung der Erregerschaltung (39) einer Windenergieanlage (100) verfügbar macht, wobei die Energieversorgungseinrichtung (22) einen Wechselrichter (28) aufweist, um die Spannung der am Eingang (25) zugeführten Energie in eine für die Komponenten (56-72) angepasste Wechselspannung zu erzeugen und
die Energieversorgungseinrichtung (22) einen Transformator (34) aufweist, um die mit dem Wechselrichter (28) erzeugte Wechselspannung in eine Wechselspannung zu transformieren, die geeignet ist zur Versorgung der Komponenten (56-72), wobei der Transformator (34), insbesondere auf seiner Primärseite, die Energie aus dem Gleichspannungszwischenkreis (14) bezieht und, insbesondere an der Sekundärseite, am Ausgang (36) die Energie für die Komponenten (56-72) bereitstellt, **dadurch gekennzeichnet, dass** der Transformator (34),
sekundärseitig, zusätzlich mit einem Versorgungsnetz (20) verbindbar ist um Energie aus dem Versorgungsnetz (20) zur Versorgung der Komponenten (56-72) oder der Erregerschaltung (39) bereitzustellen.

7. Energieversorgungseinrichtung nach Anspruch 6, wobei die Energieversorgungseinrichtung (22) ein Filter (30), insbesondere eine Induktivität oder Drossel und/oder mindestens ein Kondensator, aufweist, um die mit einem Wechselrichter (28) erzeugte Wechselspannung zu glätten.

8. Energieversorgungseinrichtung nach einem der Ansprüche 6 oder 7, wobei die Energieversorgungseinrichtung (22) einen Energiespeicher (26) aufweist, der vorzugsweise mit einem Gleichspannungszwischenkreis (14) verbindbar ist.

9. Energieversorgungseinrichtung nach einem der Ansprüche 6 bis 8, wobei die Energieversorgungseinrichtung (22) einen Gleichrichter (38) aufweist, um der Energieversorgungseinrichtung (22) zugeführte Energie aus dem Versorgungsnetz (20) der Erregerschaltung (39) am weiteren Ausgang (41) und/oder dem Energiespeicher (26) und/oder den Komponenten (56-72) bereitzustellen.

10. Windenergieanlage mit einer Energieversorgungseinrichtung (22) nach einem der Ansprüche 6 bis 9, zum Ausführen eines Verfahrens nach einem der Ansprüche 1 bis 5.

## Claims

1. A method of supplying at least one component (56-72) of a wind turbine (100) with energy by an energy supply device (22), wherein the energy is taken by the energy supply device (22) in operation of the wind turbine from the energy generated with the generator (10) of the wind turbine (100) and supplied to the component (56-72) of the wind turbine (100), wherein
the voltage of the energy generated with the generator (10) is rectified with a rectifier (12) and put into intermediate storage in a dc voltage intermediate circuit (14), wherein the energy for supplying the component (56-72) is taken from the dc voltage intermediate circuit (14) by the energy supply device (22), wherein
the voltage of the energy taken from the dc voltage intermediate circuit (14) is converted with a transformer (34) of the energy supply device (22) into a voltage suited for the component (56-72), in particular 400 V, wherein
the transformer (34), in particular on its primary side, obtains the energy from the dc voltage intermediate circuit (14) and, in particular at the secondary side, at the output (36) provides the energy for the components (56-72),
**characterized in that**
the transformer (34) can additionally be connected at its secondary side to a supply grid (20) in order to provide energy from the supply grid (20) for supplying the components (56-72) or the exciter circuit (39).

2. A method according to claim 1 wherein the voltage of the energy taken from the dc voltage intermediate circuit (14) for supplying the component (56-72) is converted into an ac voltage with an inverter (28) of the energy supply device (22), wherein the inverter (28) of the energy supply device (22) is different from an inverter (16) which converts the voltage of the energy provided in the dc voltage intermediate circuit (14) for a supply grid (20) into an ac voltage.

3. A method according to claim 2 wherein the ac voltage converted with the inverter (28) of the energy supply device (22) is filtered, in particular smoothed, with a filter (30) of the energy supply device (22), in particular an inductance or choke and/or at least one capacitor.

4. A method according to one of the preceding claims wherein the energy supply device (22) has an energy storage means (26) which in particular is an accumulator and the at least one component (56-72) of the wind turbine (100) and/or an exciter circuit (39) of the wind turbine (100) can be supplied with energy from the energy storage means (26), in particular when the generator (10) is not generating energy.

5. A method according to one of the preceding claims wherein in the situation where no energy is available in the dc voltage intermediate circuit (14) and/or an energy storage means (26) the at least one component (56-72) and/or the exciter circuit (39) is provided with energy from a supply grid (20) connected to the wind turbine (100).

6. An energy supply device adapted to carry out a method according to one of claims 1 to 5, wherein
the energy supply device (22) has an input (25) which can be connected to a dc voltage intermediate circuit (14) and at an output (36) makes available energy for supply to the components (56-72) and/or at a further output (41) makes available energy for supply to the exciter circuit (39) of a wind turbine (100),
wherein the energy supply device (22) has an inverter (28) for converting the voltage of the energy supplied at the input (25) into an ac voltage suited for the components (56-72) and the energy supply device (22) has a transformer (34) for transforming the ac voltage generated with the inverter (28) into an ac voltage suitable for the supply to the components (56-72), wherein
the transformer (34), in particular on its primary side, obtains the energy from the dc voltage intermediate circuit (14) and, in particular at the secondary side, at the output (36) provides the energy for the components (56-72),
**characterized in that**
the transformer (34) can additionally be connected at its secondary side to a supply grid (20) in order to provide energy from the supply grid (20) for supplying the components (56-72) or the exciter circuit (39).

7. An energy supply device according to claim 6 wherein the energy supply device (22) has a filter (30), in particular an inductance or choke and/or at least one capacitor to smooth the ac voltage generated with an inverter (28).

8. An energy supply device according to one of claims 6 or 7 wherein the energy supply device (22) has an energy storage means (26) which can preferably be connected to a dc voltage intermediate circuit (14).

9. An energy supply device according to one of claims 6 to 8 wherein the energy supply device (22) has a rectifier (38) to provide energy supplied by the energy supply device (22) from the supply grid (20) to the exciter circuit (39) at the further output (41) and/or the energy storage means (26) and/or the components (56-72).

10. A wind turbine comprising an energy supply device (22) according to one of claims 6 to 9 for carrying out a method according to one of claims 1 to 5.

## Revendications

1. Procédé d'alimentation en énergie d'au moins un composant (56-72) d'une éolienne (100) grâce à un dispositif d'alimentation en énergie (22), dans lequel l'énergie du dispositif d'alimentation en énergie (22) est prélevée sur l'énergie générée par un générateur (10) de l'éolienne (100) pendant le fonctionnement de l'éolienne (100) et est fournie aux composants (56-72) de l'éolienne (100) en vue de leur alimentation, dans lequel
la tension de l'énergie générée par le générateur (10) est redressée avec un redresseur (12) et stockée temporairement dans un circuit intermédiaire de tension continue (14), dans lequel l'énergie permettant d'alimenter les composants (56-72) est prélevée sur le circuit intermédiaire de tension continue (14) grâce au dispositif d'alimentation en énergie (22), dans lequel la tension de l'énergie prélevée sur le circuit intermédiaire de tension continue (14) est convertie en une tension appropriée pour les composants (56-72), en particulier de 400 V, par un transformateur (34) du dispositif d'alimentation en énergie (22), dans lequel
le transformateur (34), en particulier sur son côté primaire, reçoit l'énergie en provenance du circuit intermédiaire de tension continue (14) et, en particulier au niveau du côté secondaire, fournit l'énergie pour les composants (56-72) au niveau de la sortie (36), **caractérisé en ce que** le transformateur (34), au niveau du côté secondaire, peut être relié de manière supplémentaire à un réseau d'alimentation (20) afin de fournir de l'énergie en provenance du réseau d'alimentation (20) afin d'alimenter les composants (56-72) ou le circuit d'excitation (39).

2. Procédé selon la revendication 1, dans lequel la tension de l'énergie prélevée sur le circuit intermédiaire de tension continue (14) est convertie en une tension alternative par un onduleur (28) du dispositif d'alimentation en énergie (22) afin d'alimenter les composants (56-72), dans lequel l'onduleur (28) du dispositif d'alimentation en énergie (22) est différent d'un onduleur (16) qui convertit en une tension alternative pour un réseau d'alimentation (20) la tension de l'énergie fournie dans le circuit intermédiaire de tension continue (14).

3. Procédé selon la revendication 2, dans lequel la tension alternative convertie par l'onduleur (28) du dispositif d'alimentation en énergie (22) est filtrée, en particulier lissée, par un filtre (30) du dispositif d'alimentation en énergie (22), en particulier une inductance ou une bobine d'induction et/ou au moins un condensateur.

4. Procédé selon l'une quelconque des revendications précédentes, dans lequel le dispositif d'alimentation en énergie (22) a un accumulateur d'énergie (26) qui est en particulier un accumulateur électrique, et le au moins un composant (56-72) de l'éolienne (100) et/ou un circuit d'excitation (39) de l'éolienne (100) peuvent être alimentés en énergie à partir de l'accumulateur d'énergie (26), en particulier lorsque le générateur (10) ne génère pas d'énergie.

5. Procédé selon l'une quelconque des revendications précédentes, dans lequel, dans le cas où aucune énergie n'est disponible dans le circuit intermédiaire de tension continue (14) et/ou dans un accumulateur d'énergie (26), le au moins un composant (56-72) et/ou le circuit d'excitation (39) avec de l'énergie prélevée sur un réseau d'alimentation (20) relié à l'éolienne (100).

6. Dispositif d'alimentation en énergie conçu pour mettre en œuvre un procédé selon l'une quelconque des revendications 1 à 5, dans lequel
le dispositif d'alimentation en énergie (22) a une entrée (25) pouvant être reliée à un circuit intermédiaire de tension continue (14) et, au niveau d'une sortie (36), met à disposition de l'énergie permettant d'alimenter les composants (56-72) et/ou, au niveau d'une autre sortie (41), met à disposition de l'énergie permettant d'alimenter le circuit d'excitation (39) d'une éolienne (100), dans lequel le dispositif d'alimentation en énergie (22) a un onduleur (28) afin de générer la tension de l'énergie fournie au niveau de l'entrée (25) sous la forme d'une tension alternative appropriée pour les composants (56-72) et
le dispositif d'alimentation en énergie (22) a un transformateur (34) afin de transformer la tension alternative générée par l'onduleur (28) en une tension alternative appropriée pour l'alimentation des composants (56-72), dans lequel
le transformateur (34), en particulier sur son côté primaire, reçoit l'énergie en provenance du circuit intermédiaire de tension continue (14) et, en particulier au niveau du côté secondaire, fournit l'énergie pour les composants (56-72) au niveau de la sortie (36), **caractérisé en ce que** le transformateur (34), au niveau du côté secondaire, peut être relié de manière supplémentaire à un réseau d'alimentation (20) afin de fournir de l'énergie à partir du réseau d'alimentation (20) pour alimenter les composants (56-72) ou le circuit d'excitation (39).

7. Dispositif d'alimentation en énergie selon la revendication 6, dans lequel le dispositif d'alimentation en énergie (22) a un filtre (30), en particulier une inductance ou une bobine d'induction et/ou au moins un condensateur, afin de lisser la tension alternative générée par un onduleur (28).

8. Dispositif d'alimentation en énergie selon la revendication 6 ou 7, dans lequel le dispositif d'alimentation en énergie (22) a un accumulateur d'énergie (26) qui peut de manière préférée être relié à un circuit intermédiaire de tension continue (14).

9. Dispositif d'alimentation en énergie selon l'une quelconque des revendications 6 à 8, dans lequel le dispositif d'alimentation en énergie (22) a un redresseur (38) afin de fournir de l'énergie, fournie au dispositif d'alimentation en énergie (22) et provenant du réseau d'alimentation (20), au circuit d'excitation (39) au niveau de l'autre sortie (41) et/ou à l'accumulateur d'énergie (26) et/ou aux composants (56-72).

10. Éolienne comprenant un dispositif d'alimentation en énergie (22) selon l'une quelconque des revendications 6 à 9, pour mettre en œuvre un procédé selon l'une quelconque des revendications 1 à 5.
